# EUROPEAN PATENT APPLICATION

(11) **EP 2 309 317 A2**
(43) Date of publication of application: **13.04.2011**
(21) Application number: 10005574.8
(22) Date of filing: 28.05.2010
(51) Int. Cl.: G02F 1/13357, H01J 61/067, H01J 61/52

(54) **Backlight and liquid crystal display device**

(30) Priority: 15.09.2009 JP 2009213100
(71) Applicant: Hitachi Consumer Electronics Co., Ltd., Tokyo (JP)
(72) Inventor: Yamamoto, Kenichi, Tokyo 100-8220 (JP); Mikami, Yoshiro, Tokyo 100-8220 (JP); Imamura, Shin, Tokyo 100-8220 (JP); Katagishi, Makoto, Tokyo 100-8220 (JP)
(74) Representative: Strehl Schübel-Hopf & Partner

(57) **Abstract**

There are provided a backlight capable of improving luminance efficiency (brightness efficiency) by devising a structure of a HCFL to allow adjustment of a cold spot temperature, and further provided a liquid crystal display device using the backlight. A distance (cathode length, (LH)) between one tube end portion (10) and one filament (8) of a pair of filaments (8) is set longer than a distance (cathode length, (LL)) between the other tube end portion (10) and the other filament (8). In this manner, at least the tube end portion (10) on the longer cathode length side can be set as the cold spot. Further, a tube end portion (10) of a hot cathode fluorescent tube (1) is arranged outside a lamp house (2). In this manner, the cold spot set at the tube end portion (10) of the hot cathode fluorescent tube (1) can be arranged outside the lamp house (2) where the temperature is low, and the cold spot temperature can be decreased.

## Description

### TECHNICAL FIELD OF THE INVENTION

The present invention relates to a backlight and a liquid crystal display device. More particularly, the present invention relates to a technique effective for improving luminance efficiency of the backlight.

### BACKGROUND OF THE INVENTION

Japanese Patent Application Laid-Open Publication No. 2008-262818 (Patent Document 1) and Japanese Patent Application Laid-Open Publication (Translation of PCT application) No. 2008-504646 (Patent Document 2) disclose a technique of taking a cool action against a heat generation problem in a hot cathode fluorescent lamp (HCFL) used for a backlight of a liquid crystal display device.

More specifically, Patent Document 1 exemplifies a backlight in which six hot cathode fluorescent lamps each having a bulb outer diameter of 12 mm are arranged in a liquid crystal display (liquid crystal display device) having a 32-inch display size. And, in Patent Document 1, a filament of the HCFL is arranged at a position of only 10 mm inside from a base formed at a tube end portion, and a metallic lamp holder for covering the filament is provided, so that it is achieved to decrease a temperature of the filament.

Patent Document 2 discloses a technique of cooling a tube end portion by providing a metallic thermal conductive element inside a base formed at the tube end portion so as to surround an exhaust tube. In this manner, a cold spot temperature of the HCFL can be decreased, and therefore, luminance efficiency (brightness efficiency) can be improved.

### SUMMARY OF THE INVENTION

In recent years, from a point of view of a global warming problem, a requirement for energy-saving electrical equipment has been increased. Even in a liquid crystal display device such as a thin liquid crystal television (TV) and a display, reduction of entire power (set power) as a set of entire liquid crystal display device has been strongly required. A liquid crystal display device has a backlight, and a half or more of the set power becomes normally the power for the backlight. Therefore, it is effective to reduce the power for the backlight for reducing the set power.

In most cases, a cold cathode fluorescent lamp (CCFL) of one type of a fluorescent tube (lamp) is currently used as a light source for a backlight used for a liquid crystal display device. Since a narrow tube of 4 mmφ or smaller is used for the CCFL, the CCFL is advantageous for a thinned set resulted from a thinned backlight, and has an advantage of low cost per one tube. However, due to a largely-scaled (for example, 32 inch or larger) liquid crystal display (liquid crystal display device) such as a thin liquid crystal TV, a fluorescent tube length (bulb length) is increased. Due to increasing the fluorescent tube length in this manner, a driving voltage is increased higher, and therefore, it tends to complicate a lighting circuit for the CCFL and increase power consumption. Also, an input power per one tube is small, and therefore, it is required to increase the number of fluorescent tubes (bulbs) for ensuring screen brightness, and as result, there arise problems of increasing a component cost and the number of assembly processes.

On the other hand, in a hot cathode fluorescent lamp (HCFL), a filament is used for an electrode, and therefore, the HCFL has features of higher power and higher efficiency than those of the CCFL. Therefore, it is considered that it is advantageous to use the HCFL for the reduction of the set power. Also in a HCFL having such a feature, it is effective to improve luminance efficiency (brightness efficiency) for the reduction of the set power. The luminance efficiency of the HCFL is determined by a temperature of a cold spot formed inside a bulb (fluorescent tube) configuring the HCFL. The cold spot is a region whose temperature is the lowest inside the bulb (fluorescent tube) when the HCFL is lightened. In a conventional HCFL, the cold spot is formed in a center portion of the bulb (fluorescent tube), and the cold spot temperature is, for example, about 70°C. However, when the cold spot temperature is about 70°C, the luminance efficiency is not an optimum value, and therefore, there arises a problem incapable of sufficiently improving the luminance efficiency. That is, in an existing HCFL, the cold spot is structurally formed in the center portion of the bulb (fluorescent tube), and the cold spot temperature cannot be set to a temperature resulting in the highest luminance efficiency (brightness efficiency), and therefore, there arises a problem incapable of sufficiently improving the luminance efficiency of the HCFL.

Accordingly, it is considered that the cold spot temperature is adjusted to the temperature resulting in the highest luminance efficiency (brightness efficiency). However, in the existing HCFL, the region where the cold spot is formed is in the center portion of the bulb (fluorescent tube), and therefore, it is difficult to adjust the temperature. That is, for example, when it is considered that a radiator plate is provided so as to cover the center portion of the bulb (fluorescent tube) in order to decrease the temperature of the center portion of the bulb (fluorescent tube), the radiator plate shields light emitted from the center portion of the bulb (fluorescent tube), and therefore, there arises a problem of darkening a screen of the liquid crystal display device. That is, in the center portion of the bulb (fluorescent tube) where the cold spot is formed, it is difficult to adjust the cold spot temperature.

A preferred aim of the present invention is to provide a backlight whose luminance efficiency (brightness efficiency) is improved by devising a structure of a HCFL to allow adjustment of a cold spot temperature, and provide a liquid crystal display device using the backlight.

The above and other preferred aims and novel characteristics of the present invention will be apparent from the description of the present specification and the accompanying drawings.

The typical ones of the inventions disclosed in the present application will be briefly described as follows.

A backlight according to a typical embodiment includes: a hot cathode fluorescent lamp; and a lamp house in which the hot cathode fluorescent lamp is arranged, and the hot cathode fluorescent lamp includes: a bulb on whose inside surface a phosphor is formed; and a pair of filaments provided inside the bulb and emitting thermal electrons, and at least one tube end portion of the bulb is a cold spot of the hot cathode fluorescent lamp.

Also, a liquid crystal display device according to a typical embodiment includes a backlight, and the backlight includes: a hot cathode fluorescent lamp; and a lamp house in which the hot cathode fluorescent lamp is arranged, the hot cathode fluorescent lamp includes: a bulb on whose inside surface a phosphor is formed; and a pair of filaments provided inside the bulb and emitting thermal electrons, and at least one tube end portion of the bulb is a cold spot of the hot cathode fluorescent lamp.

The effects obtained by typical aspects of the present invention disclosed in the present application will be briefly described below.

By adjusting the cold spot temperature of the HCFL provided inside the backlight, the luminance efficiency (brightness efficiency) can be improved.

### BRIEF DESCRIPTIONS OF THE DRAWINGS

FIG. 1 is a view illustrating a schematic structure of a backlight used for a liquid crystal display device according to a first embodiment;
FIG. 2 is a view illustrating a schematic structure of a hot cathode fluorescent tube configuring the backlight according to the first embodiment;
FIG. 3 is a graph illustrating a relation between a tube end temperature of the hot cathode fluorescent tube and a distance (cathode length) between a tube end portion of a bulb and a filament;
FIG. 4 is a graph illustrating a relation between brightness efficiency and a cold spot temperature in a case that a longer cathode length of the hot cathode fluorescent tube is 40 mm;
FIG. 5 is a view illustrating a schematic structure of a hot cathode fluorescent tube configuring a backlight according to a second embodiment;
FIG. 6 is a view illustrating a vent of the backlight according to the second embodiment, the vent having a net structure whose hole size is 3 mm x 9 mm;
FIG. 7 is a view illustrating a vent opening/closing cover for opening and closing the vent of the backlight according to the second embodiment;
FIG. 8 is a view illustrating a schematic structure of a hot cathode fluorescent tube configuring a backlight according to a third embodiment;
FIG. 9 is a view illustrating a schematic structure of a hot cathode fluorescent tube configuring a backlight according to a fourth embodiment;
FIG. 10 is an enlarged view illustrating a position of a radiator in a tube end portion of the hot cathode fluorescent tube according to the fourth embodiment;
FIGs. 11A and 11B are views each illustrating an example of a fin structure of the radiator according to the fourth embodiment;
FIG. 12 is a view illustrating a schematic structure of a hot cathode fluorescent tube configuring a backlight according to a fifth embodiment;
FIG. 13 is a view illustrating another schematic structure of the hot cathode fluorescent tube configuring the backlight according to the fifth embodiment;
FIG. 14 is a view illustrating a schematic structure of still another hot cathode fluorescent tube configuring the backlight according to the fifth embodiment;
FIG. 15 is a view illustrating a schematic structure of a hot cathode fluorescent tube configuring a backlight according to a sixth embodiment;
FIG. 16 is a view illustrating another schematic structure of the hot cathode fluorescent tube configuring the backlight according to the sixth embodiment;
FIG. 17 is a view illustrating a schematic structure of a hot cathode fluorescent tube configuring a backlight according to a seventh embodiment; and
FIG. 18 is a view illustrating a schematic structure of a hot cathode fluorescent tube configuring a backlight according to an eighth embodiment.

### DESCRIPTIONS OF THE PREFERRED EMBODIMENTS

In the embodiments described below, the invention will be described in a plurality of sections or embodiments when required as a matter of convenience. However, these sections or embodiments are not irrelevant to each other unless otherwise stated, and the one relates to the entire or a part of the other as a modification example, details, or a supplementary explanation thereof.

Also, in the embodiments described below, when referring to the number of elements (including number of pieces, values, amount, range, and the like), the number of the elements is not limited to a specific number unless otherwise stated or except the case where the number is apparently limited to a specific number in principle. The number larger or smaller than the specified number is also applicable.

Further, in the embodiments described below, it goes without saying that the components (including element steps) are not always indispensable unless otherwise stated or except the case where the components are apparently indispensable in principle.

Similarly, in the embodiments described below, when the shape of the components, positional relation thereof, and the like are mentioned, the substantially approximate and similar shapes and the like are included therein unless otherwise stated or except the case where it is conceivable that they are apparently excluded in principle. The same goes for the numerical value and the range described above.

Also, components having the same function are denoted by the same reference symbols throughout the drawings for describing the embodiments, and the repetitive description thereof is omitted. Note that hatching is used even in a plan view so as to make the drawings easy to see.

### (First Embodiment)

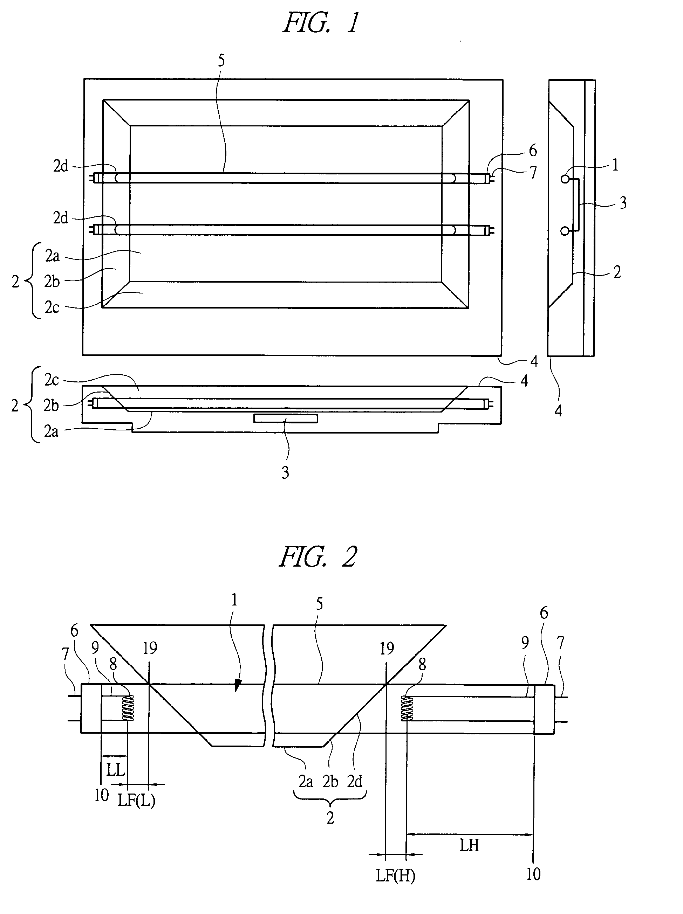

With reference to FIGs. 1 to 4, a first embodiment according to the present invention is described with using a backlight used for a 32-inch liquid crystal television (one type of a liquid crystal display device) as an example.

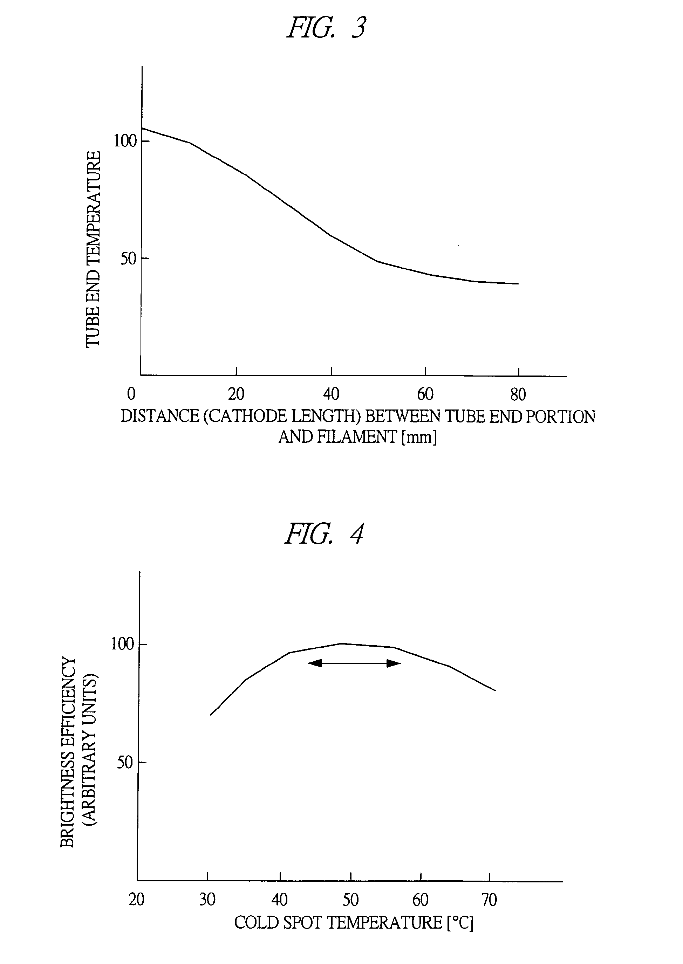

FIG. 1 is a view illustrating a schematic structure of the backlight used for the liquid crystal display device according to the first embodiment. FIG. 2 is a view illustrating a cross-sectional schematic structure of a hot cathode fluorescent tube 1 configuring the backlight according to the first embodiment. FIG. 3 is a graph illustrating a dependency of a tube end temperature of a tube end portion in the hot cathode fluorescent tube 1 with respect to a distance (cathode length) between the tube end portion of a bulb and a filament. FIG. 4 is a graph illustrating a dependency of brightness efficiency with respect to a cold spot temperature in a case that a longer cathode length of the hot cathode fluorescent tube 1 is 40 mm.

As illustrated in FIG. 1, the backlight used for the liquid crystal display device according to the first embodiment includes: the hot cathode fluorescent tube 1; a lamp holder (not illustrated) of maintaining electric conduction on both ends of the hot cathode fluorescent tube (fluorescent tube) 1; a reflective plate 2; a lighting circuit 3 of lighting the hot cathode fluorescent tube 1; and a bottom cover 4 of covering them.

The hot cathode fluorescent tube 1 includes: a bulb 5; and bases 6 provided on both ends of the hot cathode fluorescent tube 1. The reflective plate 2 includes: a reflective-plate bottom surface 2a; and reflective-plate side surfaces 2b and 2c, and a reflective-plate side surface hole 2d is provided on the reflective-plate side surface 2b in a longitudinal direction of the reflective plate 2 so that the hot cathode fluorescent tube 1 is penetrated through the reflective plate side surface hole 2d. The reflective-plate side surfaces 2b and 2c are arranged at an angle of about 45 degrees with respect to the reflective-plate bottom surface 2a. A pair of pins 7 existing at the bases 6 provided at both ends of the hot cathode fluorescent tube 1 are fixedly held to the lamp holder (not illustrated), and current from the lighting circuit 3 is conducted to light the hot cathode fluorescent tube 1.

The reflective plate 2 is formed of a resin layer made of polyethylene terephthalate (PET) in which white titanium oxide (or calcium carbonate) having high reflectivity is diffused, and has a thickness of, for example, 1 mm. A same-shaped metal plate is provided for supporting the reflective plate 2, and has a thickness of, for example, 1.5mm. An opening portion in an opposite direction (facing opening portion) to the reflective-plate bottom surface 2a in the backlight illustrated in FIG. 1 is covered by an optical sheet (not illustrated) for diffusing the light generated from the backlight so as to prevent brightness nonuniformity and efficiently transmitting the light forward. A space surrounded by the reflective plate 2 and the optical sheet is called the lamp house. That is, the lamp house is defined as a region surrounded by the reflective-plate bottom surface 2a, reflective-plate side surfaces 2b and 2c, and the optical sheet not illustrated.

The optical sheet includes, in an order from the reflective plate 2 side, for example: a diffusing plate (thickness of 2.0 mm); a prism sheet (BEF whose thickness is 0.155 mm and which is manufactured by Sumitomo 3M Limited) ; a polarizing sheet (DBEF (dual brightness enhancement film) whose thickness is 0.440 mm and which is manufactured by Sumitomo 3M Limited); and others. Further, a liquid crystal panel (whose thickness is, for example, about 2 mm) (not illustrated) is arranged in front of the optical sheet, and a top cover (not illustrated) is arranged so as to cover the liquid crystal panel and the optical sheet.

An image display region has a size of 698 mm x 392 mm. The image display region is provided inside above the reflective-plate side surfaces 2b and 2c, and a top cover region outer than the image display region is a frame region. A height of the lamp house (height from a top surface of the reflective plate bottom surface 2a to a bottom surface of the diffusing plate) illustrated in FIG. 1 is, for example, 45 mm.

FIG. 2 is a view illustrating a cross-sectional schematic structure of the hot cathode fluorescent tube 1 configuring the backlight according to the first embodiment. In FIG. 2, the hot cathode fluorescent tube 1 includes: the bulb 5; a phosphor (not illustrated) coated inside the bulb 5; the bases 6; the pins 7; filaments 8; lead lines 9; and others, and mercury and rare gas are filled inside the bulb 5. Each gas pressure of the mercury and rare gas filled inside the bulb 5 is 200 Pa or higher and 800 Pa or lower. Note that the gas pressure inside the bulb 5 of the hot cathode fluorescent tube 1 may be 200 Pa or higher and 600 Pa or lower, and further, the gas pressure inside the bulb 5 of the hot cathode fluorescent tube 1 may be 50 Pa or higher and 300 Pa or lower.

Since a lower gas pressure results in higher luminance efficiency from excited mercury, the gas pressure is preferably 200 Pa or higher and 600 Pa or lower rather than 200 Pa or higher and 800 Pa or lower. Further, the luminance efficiency can be higher by setting the gas pressure to 50 Pa or higher and 300 Pa or lower. However, a filament life (fluorescent tube life) becomes short by setting the gas pressure too low, and therefore, the gas pressure is preferably 50 Pa or higher.

In FIG. 2, the pair of filaments 8 for emitting thermal electrons is provided on both ends of the hot cathode fluorescent tube 1, and both ends of each filament 8 is connected with each of the pair of pins 7 arranged outside, by the two lead lines 9 through the bases 6. Each pin 7 is formed so that power is supplied thereto from the lighting circuit 3 illustrated in FIG. 1. Therefore, the filament 8 is heated by the power supply from the lighting circuit 3, so that alternating-current voltage is also applied between the pair of filaments 8 arranged on both ends of the bulb 5 to carry tube current. By the tube current, the mercury existing inside is excited, and when the excited mercury returns to its ground state, ultraviolet rays having a wavelength of 254 nm and others are generated (visible light is also partially generated). And, the generated ultraviolet rays are irradiated to the phosphor coated inside the bulb 5, so that visible light is generated from the phosphor. In this manner, the visible light is irradiated from the hot cathode fluorescent lamp.

In the first embodiment, as illustrated in FIG. 1, two hot cathode fluorescent tubes 1 are arranged on a center side. The bulb 5 is made of soda-lime glass or barium strontium silicate (soft glass). An outer diameter of the bulb 5 is, for example, 15.5 mm. The phosphor (not illustrated) is coated on an inside surface of the bulb 5. More specifically, a protective film made of alumina (aluminum oxide) is formed on the inside surface of the bulb 5, and a phosphor layer is stacked on the protective film. For the phosphor forming the phosphor layer, for example, mixed rare earth fluorescent bodies emitting each light of colors of red (Y₂O₃:Eu), green (LaPO₄:Ce, Tb₃), and blue (BaMg₂Al₁₆O₂₇:Eu, Mn) are used.

Inside the bulb 5, the mercury and the rare gas are filled. In the first embodiment, mercury (not illustrated) of about 5 mg and argon (Ar) whose pressure at room temperature is 270 Pa as a buffered rare gas are filled. As the mercury, not only single mercury but also, for example, amalgam form such as zinc mercury, tin mercury, bismuth mercury, and indium mercury can be filled. Also, as the rare gas, not only an argon (Ar) material whose argon mix ratio is 100% but also an argon (Ar) material in which argon is mixed with krypton (Kr) can be used. A mix ratio (partial pressure ratio) of the krypton (Kr) is, for example, 20% to 60%.

The filament 8 illustrated in FIG. 2 is made of tungsten. On the filament 8, an emitter made of oxides of strontium, calcium, barium, or others are coated. In the first embodiment, on each filament 8 configuring a pair of electrodes of the hot cathode fluorescent tube 1, the emitter of 5.0 mg or more is coated.

In the hot cathode fluorescent tube 1 according to the first embodiment, in both ends of the bulb 5, a distance (cathode length) between one tube end portion 10 and one filament 8 (filament center) on one side is different from that on the other side. That is, the cathode length between the one tube end portion 10 and the one filament 8 is different from that between the other tube end portion 10 and the other filament 8, and therefore, these cathode lengths are asymmetric.

Here, the tube end portion 10 represents an end portion inside the gas-filled space in the bulb 5. For example, in FIG. 2, a cathode length LL between a left tube end portion 10 and a left filament 8 is, for example, 22.5 mm, and a cathode length LH between a right tube end portion 10 and a right filament 8 is, for example, 40 mm. Although end portions of the tube end portion 10 and the base 6 are illustrated so as to correspond with each other for simplicity in FIG. 2, they may not necessarily correspond with each other. The tube end portion 10 is practically at the farthest position inside the gas filled space away from the filament in a bulb longitudinal direction of the fluorescent tube in each tube end. Note that the cathode length LL between the left tube end portion 10 and the left filament 8 is, for example, 22.5 mm and the cathode length LH between the right tube end portion 10 and the right filament 8 is, for example, 40 mm. However, features of the first embodiment is that the cathode length between the one tube end portion 10 and the one filament 8 is different from that between the other tube end portion 10 and the other filament 8, and these cathode lengths are asymmetric. Therefore, in FIG. 2, the lengths are illustrated by not a correct scale but an emphatic scale.

Each distance LF (= LF(L) = LF(H)) between a top portion 19 of the reflective-plate side surface hole 2d and each filament 8 is set to, for example, 10 mm. Here, in a distance of "LF = 0 mm", positions of the filament 8 and the top portion 19 of the reflective-plate side surface hole 2d are the same. In a distance of "LF < 0 mm (negative value)", the filament 8 is positioned inside the lamp house provided inside the reflective-plate side surface hole 2d. A reason of setting the distance LF between the top portion 19 of the reflective-plate side surface hole 2d and the filament 8 to 10 mm is as follows.

Normally, darkening is caused due to time-dependent change in regions of about 10 mm backward and forward from the center of the filament 8. Therefore, when the distance LF is set to 10 mm or shorter, the blackening is recognized as the brightness nonuniformity even through the liquid crystal panel.

Also, in this manner, by arranging the tube end portion 10 of the hot cathode fluorescent tube 1 outside the lamp house whose atmosphere temperature is lower than that inside the lamp house, a temperature of the tube end portion 10 can be decreased. Generally, it is known that brightness efficiency (luminance efficiency) of a hot cathode fluorescent lamp is varied by a temperature of a cold spot existing inside the bulb 5. As described above, the cold spot is a point whose temperature is the lowest inside the bulb 5 when the hot cathode fluorescent tube 1 is lightened. In the first embodiment, a length (cathode length LH + distance LF(H)) of the portion arranged outside the lamp house in the one tube end portion 10 side of the bulb 5 is different from a length (cathode length LL + distance LF(L)) of the portion arranged outside the lamp house in the other tube end portion 10 side of the bulb 5. In this case, the cold spot of the hot cathode fluorescent tube 1 is the tube end portion 10 having the longer cathode length LH, and therefore, the cold spot temperature can be adjusted so that the luminance efficiency is optimized.

FIG. 3 is a graph illustrating a relation between the temperature of the tube end portion 10 of the hot cathode fluorescent tube 1 and the distance (cathode length) between the tube end portion of the bulb 5 and the filament. FIG. 4 is a graph illustrating a relation between the brightness efficiency and the temperature of the tube end portion (equal to the cold spot temperature) on the longer (one) cathode length side in the case that the longer (one) cathode length of the hot cathode fluorescent tube 1 is 40 mm.

In these measurements, a liquid crystal panel (liquid crystal display device) in which the hot cathode fluorescent tube 1 is installed as the backlight is manufactured, and the liquid crystal panel is formed as the set state with the top and bottom covers, so that these measurements are made by using a thermocouple. A surrounding temperature of the set (surrounding temperature of the liquid crystal display device) is 25°C.

In FIG. 4, the atmosphere temperature (surrounding temperature) is changed by arranging the above-described set (liquid crystal display device) in a constant temperature room, so that the cold spot temperature of the hot cathode fluorescent lamp is changed. When the cathode length is 40 mm, the temperature of the center portion of the hot cathode fluorescent tube 1 (the upper one of the two hot cathode fluorescent tubes 1 in FIG. 1) is about 72°C. At this time, the temperature of the tube end portion 10 on the shorter cathode length side is about 85°C. On the other hand, the temperature of the tube end portion 10 on the longer cathode length side is about 60°C. Therefore, when the longer cathode length is 40 mm, the cold spot of the hot cathode fluorescent tube 1 is the tube end portion 10 on the longer cathode length side. Here, the brightness efficiency of the hot cathode fluorescent tube 1 is determined by the cold spot temperature of the hot cathode fluorescent tube 1. At this time, even if the cathode length is changed, the temperature of the center portion of the hot cathode fluorescent tube 1 is not changed much.

As illustrated in FIG. 3, the cathode length equivalent to 72°C of the temperature of the center portion of the hot cathode fluorescent tube 1 is about 31 mm. Meanwhile, by setting the cathode length to be larger than about 31 mm, the cold spot of the hot cathode fluorescent tube 1 can be set at the tube end portion 10. That is, when the cathode length is set to be smaller than about 31 mm, the temperature of the center portion of the hot cathode fluorescent tube 1 is lower than that of the tube end portion 10 of the hot cathode fluorescent tube 1, and as a result, the cold spot of the hot cathode fluorescent tube 1 becomes at the center portion of the hot cathode fluorescent tube 1. On the other hand, when the cathode length is set to be larger than about 31 mm, the temperature of the tube end portion 10 of the hot cathode fluorescent tube 1 is lower than that of the center portion of the hot cathode fluorescent tube 1, and as a result, the cold spot of the hot cathode fluorescent tube 1 can be set at the tube end portion 10.

Since the cathode length of the tube end portion 10 on the shorter cathode length side is 22.5 mm shorter than 30 mm, the temperature of the tube end portion 10 on the shorter cathode length side is 85°C, which is higher than the temperature of the center portion of the hot cathode fluorescent tube 1. Therefore, when both of the cathode lengths on both ends of the hot cathode fluorescent tube 1 are similarly 22.5 mm, the cold spot of the hot cathode fluorescent tube 1 becomes at the center portion of the hot cathode fluorescent tube 1. At this time, since the cold spot temperature is 72°C, it has been found out that, as illustrated in FIG. 4, a brightness efficiency of this case is about 20% lower than that of a case of an optimized cold spot temperature (cold spot temperature resulting in the highest brightness efficiency, which is about 48°C in FIG. 4).

On the other hand, in the first embodiment, the tube end portion 10 having the cathode length of 40 mm longer than 30 mm is provided, and therefore, the cold spot is not at the center portion of the hot cathode fluorescent tube 1 but at the tube end portion 10 on the longer cathode length side. In this manner, in the first embodiment, the cold spot of the hot cathode fluorescent tube 1 can be moved from the center portion of the hot cathode fluorescent tube 1 to the tube end portion 10 of the same, and therefore, the cold spot temperature can be easily adjusted, so that the cold spot temperature can be close to the optimized cold spot temperature, and as a result, the brightness efficiency (luminance efficiency) of the hot cathode fluorescent lamp can be optimized. More particularly, in the first embodiment, the tube end portion 10 on the longer cathode length side is arranged outside the lamp house where the atmosphere temperature (surrounding temperature) is low, so that the temperature of the tube end portion 10 can be decreased, and as a result, the cold spot of the hot cathode fluorescent tube 1 can be adjusted so that the brightness efficiency has the optimum value.

For example, as illustrated in FIG. 4, the cold spot temperature resulting in the highest brightness efficiency is about 48°C. If the cold spot temperature is set within a range of 40 to 60°C, the brightness efficiency is decreased by only 5% or lower than the highest value (brightness efficiency at 48°C). Therefore, when the surrounding temperature (normal room temperature) is about 25°C, the cold spot temperature is set to 40 to 60°C. Further, when the cold spot temperature is set to 45 to 55°C, the brightness efficiency is decreased by only 1 to 2% or lower than the highest value. Therefore, when the surrounding temperature (normal room temperature) is about 25°C, the cold spot temperature is desirably set to 45 to 55°C. Here, in the first embodiment, since the one (longer) cathode length is set to 40 mm, the cold spot of the hot cathode fluorescent tube 1 can be set at the one tube end portion 10. Besides, since the tube end portion 10 of the hot cathode fluorescent tube 1 is arranged outside the lamp house where the atmosphere temperature is lower than inside the lamp house, the cold spot can be easily set to the optimum cold spot temperature. As a result, according to the first embodiment, the brightness efficiency of the backlight can be set to almost the highest condition.

Note that, although the one longer cathode length is 40 mm as described above, it is found out from FIG. 3 that the longer cathode length can be set to 30 to 70 mm in order to set the temperature of the tube end portion 10 to about 40 to 60°C. At this time, the brightness efficiency is decreased by only 5% or lower than the highest value (brightness efficiency at 48°C). Although a tube diameter of the bulb 5 is 15.5 mm in this case, it may be 10 to 35 mm.

A first feature point of the first embodiment is that the distance (cathode length) between the one tube end portion 10 and the one filament 8 of the pair of filaments 8 is set to be longer than the distance (cathode length) between the other end portion 10 and the other filament 8. That is, a feature point of the first embodiment is that the cathode length between the one tube end portion 10 and the one filament 8 and the cathode length between the other end portion 10 and the other filament 8 are set to be asymmetric. In this manner, at least the tube end portion 10 on the longer cathode length side can be the cold spot. In other words, the first feature point of the first embodiment is that the cold spot of the hot cathode fluorescent tube 1 is set not at the center portion of the hot cathode fluorescent tube 1 but at the one tube end portion 10 of the hot cathode fluorescent tube 1, and this technical thought is shaped as a structure in which the distance (cathode length) between the one tube end portion 10 and the one filament 8 of the pair of filaments 8 is longer than the distance (cathode length) between the other end portion 10 and the other filament 8. In this manner, the tube end portion 10 on the longer cathode length side can be provided away from the one filament 8 generating heat, so that the temperature can be decreased. As a result, the temperature of the tube end portion 10 on the longer cathode length side can be set lower than that of the center portion of the hot cathode fluorescent tube 1, so that the cold spot can be set at the tube end portion 10 on the longer cathode length side. More specifically, for example, the temperature of the center portion of the hot cathode fluorescent tube 1 is about 75°C, and therefore, the cold spot of the hot cathode fluorescent tube 1 can be moved to the tube end portion 10 on the longer cathode length side by setting the longer cathode length to 30 mm or longer as illustrated in FIG. 3.

And, a second feature point of the first embodiment is that the tube end portion 10 of the hot cathode fluorescent tube 1 is arranged outside the lamp house as illustrated in FIG. 2. In this manner, the cold spot set at the tube end portion 10 of the hot cathode fluorescent tube 1 can be arranged outside the lamp house where the temperature is low, so that the cold spot temperature can be decreased. That is, in the tube end portion 10 of the hot cathode fluorescent tube 1, the cold spot temperature of the hot cathode fluorescent tube 1 can be easily adjusted by both means of adjusting the cathode length and arranging the tube end portion 10 outside the lamp house. For example, even when the cathode length is set to be longer than 30 mm so that the cold spot of the hot cathode fluorescent tube 1 can be set at the tube end portion 10, as long as the tube end portion 10 exists inside the lamp house, the cold spot temperature of the tube end portion 10 becomes higher than the optimum cold spot temperature (about 48°C) due to the heat stored inside the lamp house, and therefore, it is considered that the optimum brightness efficiency (luminance efficiency) cannot be obtained. On the other hand, in the first embodiment, the tube end portion 10 where the cold spot is formed is arranged outside the lamp house where the temperature is lower than inside, so that the cold spot temperature of the tube end portion 10 can be further decreased, and therefore, the cold spot temperature of the hot cathode fluorescent tube 1 can be easily adjusted to the optimum value. That is, in the first embodiment, the cold spot temperature of the hot cathode fluorescent tube 1 can be easily adjusted to almost the optimum value by both means of adjusting the cathode length and arranging the tube end portion 10 outside the lamp house.

Further, as illustrated in FIG. 2, in the first embodiment, not only the tube end portion 10 but also each filament 8 is arranged outside the lamp house, and the distance LF (= LF (L) = LF(H)) between the upper portion 19 of the reflective-plate side surface hole 2d and each filament 8 is set to be, for example, 10 mm or longer. In this manner, although the blackening is caused due to time-dependent change in the regions of about 10 mm backward and forward from the center of the filament 8, the blackening region is formed outside the lamp house in the first embodiment, and therefore, an effect capable of suppressing the brightness nonuniformity observed through the liquid crystal panel due to the blackening region can be also obtained.

As described above, according to the first embodiment, the cathode length of the hot cathode fluorescent tube 1 is increased, so that the cold spot can be set at the tube end portion 10. Besides, the tube end portion 10 is arranged outside the lamp house, so that the cold spot of the hot cathode fluorescent tube 1 can be set at almost the region where the brightness efficiency is the optimum value. Therefore, it is possible to improve the brightness efficiency (luminance efficiency) of the backlight in which the hot cathode fluorescent tube 1 according to the first embodiment is installed and the liquid crystal display device such as a liquid crystal television using the backlight. Also, compared with the conventional technique, there is no cause of decreasing yield in the technique, and therefore, an effect of suppressing the decrease of the yield can be obtained.

### (Second Embodiment)

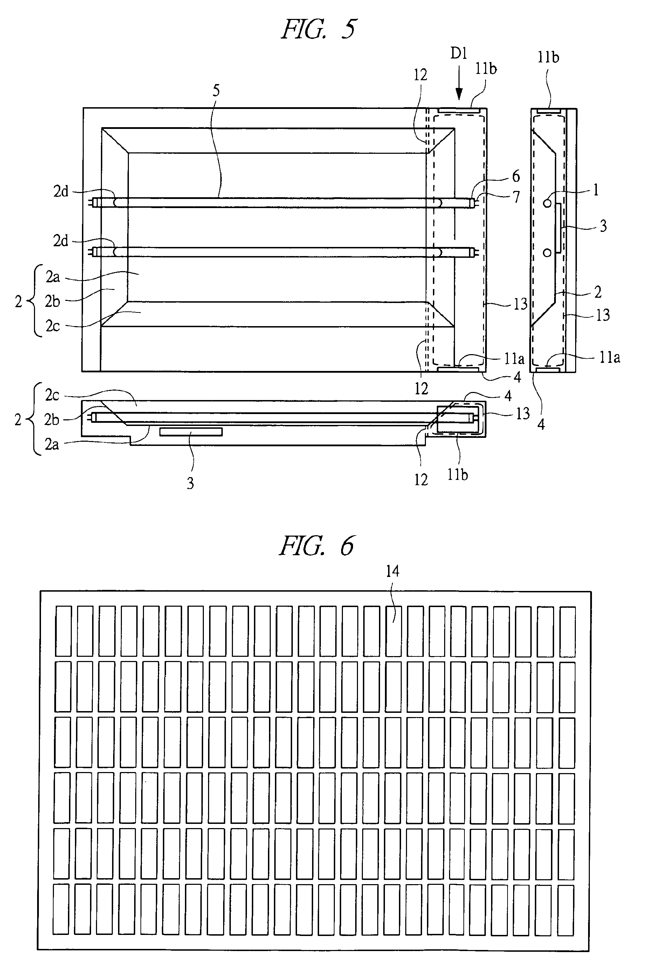

FIG. 5 is a view illustrating a schematic structure of a backlight used for a liquid crystal display device according to a second embodiment. Hereinafter, only different points from the first embodiment are described. Additional components to the schematic structure illustrated in FIG. 1 are: a vent (intake vent) 11a; a vent (exhaust vent) 11b; a partition plate 12; and a vent path 13. The vent (intake vent) 11a and the vent (exhaust vent) 11b are provided above and below the bottom cover 4, and the partition plate 12 is provided so as to fill a space between the bottom cover 4 and the reflective plate 2. The vent path 13 is a region surrounded by the bottom cover 4, the partition plate 12, the reflective-plate side surfaces 2b and 2c, vents 11a and 11b, and others. By providing the vent path 13, hot air caused by the heat radiated from the end portion of the hot cathode fluorescent tube 1 arranged from the reflective-plate side surface hole 2d toward the outside of the lamp house is convected and radiated through the vents 11a and 11b provided above and below the bottom cover 4. In this manner, the tube end portion 10 being the cold spot of the hot cathode fluorescent tube 1 is further cooled, so that, for example, the cold spot temperature of 60°C can be decreased down to 48°C.

As seen from FIG. 4, in the case of the cold spot temperature of 48°C, the brightness efficiency of the hot cathode fluorescent lamp is maximized, so that the brightness efficiency in the case can be improved by about 5% higher than that of the case of the cold spot temperature of 60°C.

Note that, in the second embodiment, a position of the lighting circuit 3 is arranged at not the center portion of the backlight but a portion close to an opposite side to the vent path 13. This is for suppressing the increase of the temperature of the tube end portion 10 due to the influence of the heat generated by the lighting circuit 3. Practically, the effect of decreasing the temperature of the tube end portion 10 by several °C lower than that of the case of arranging the lighting circuit 3 at the center portion of the backlight has been obtained.

Each of the vents 11a and 11b desirably has, for example, a net structure having holes 14 whose size is 3 mm x 9 mm as illustrated in FIG. 6 rather than a complete opening structure. A reason of providing the vents 11a and 11b each having such a net structure is that their strengths are increased and safety is increased to prevent the drop of things into the bottom cover 4 or the entering of hands, fingers, or others into the bottom cover 4.

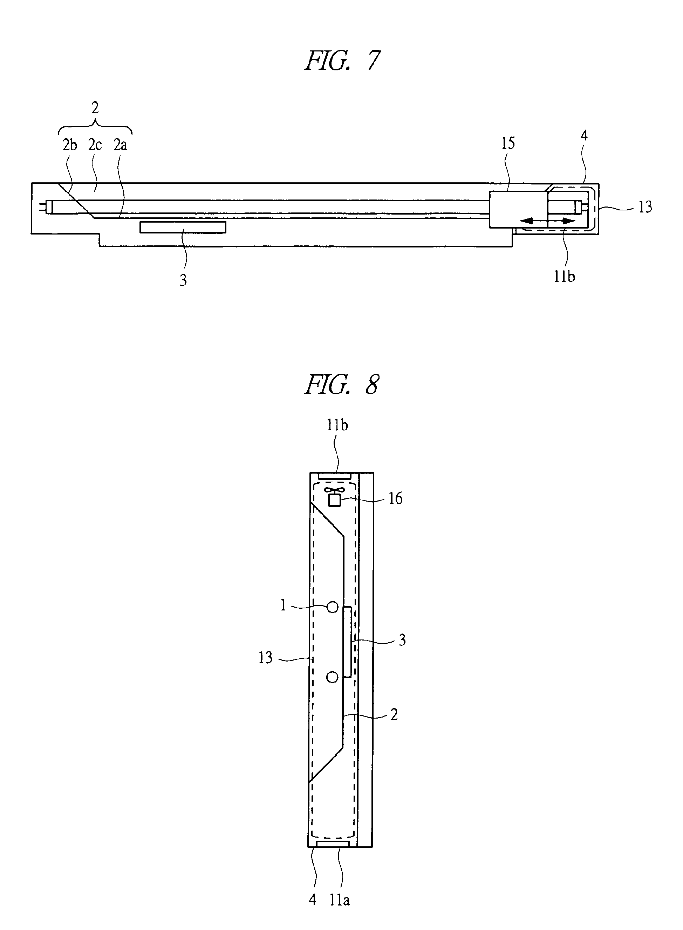

Also, it is desirable to experimentally determine sizes of the vents 11a and 11b so that the cold spot of the tube end portion 10 is about 48°C when the surrounding temperature is 25°C. At this time, as illustrated in FIG. 7, their structures may be a structure of controlling to radiate the heat caused from the tube end portion 10 may be provided by providing a vent opening/closing cover 15 of opening and closing the opening portion of the vent 11b so that an area of the opening portion is variable. Here, FIG. 7 is a view from a direction D1 in FIG. 5. Although the vent opening/closing cover 15 is provided in the vent 11b in FIG. 7, the vent opening/closing cover 15 may be provided in the vent 11a. Further, it is needless to say that the vent opening/closing cover 15 may be provided in both of the vents 11a and 11b.

Still further, the heat convection is caused by providing the vents 11a and 11b even without preventing the partition plate 12, and therefore, a structure without preventing the partition plate 12 may be used.

According to the second embodiment, the vent path 13 is provided by providing the vents 11a and 11b, so that the tube end portion 10 being the cold spot of the hot cathode fluorescent tube 1 can be further cooled, and as a result, the cold spot temperature can be optimized, and therefore, the brightness efficiency of the hot cathode fluorescent lamp can be improved. Also, compared with the conventional technique, there is no cause of decreasing yield in the technique, and therefore, an effect of suppressing the decrease of the yield can be obtained.

### (Third Embodiment)

FIG. 8 is a view illustrating a schematic structure of a backlight used for a liquid crystal display device according to a third embodiment. In FIG. 8, a different point from the second embodiment is that a fan 16 is provided in a vicinity of the vent (exhaust vent) 11b. By the fan, the tube end portion 10 being the cold spot of the hot cathode fluorescent tube 1 can be further cooled. As a result, the cold spot temperature can be optimized, and therefore, the brightness efficiency of the hot cathode fluorescent lamp can be improved. Also, compared with the conventional technique, there is no cause of decreasing yield in the technique, and therefore, an effect of suppressing the decrease of the yield can be obtained. Note that, in FIG. 8, the fan 16 is provided in the vicinity of the vent (exhaust vent) 11b. However, a structure of the fan is not limited to this, and the fan 16 may be provided, for example, in a vicinity of the vent (intake vent) 11a, or in both of the vents 11a and 11b. Further, the fan 16 may be provided in a vicinity of the tube end portion 10 of the cold spot of the hot cathode fluorescent tube 1.

### (Fourth Embodiment)

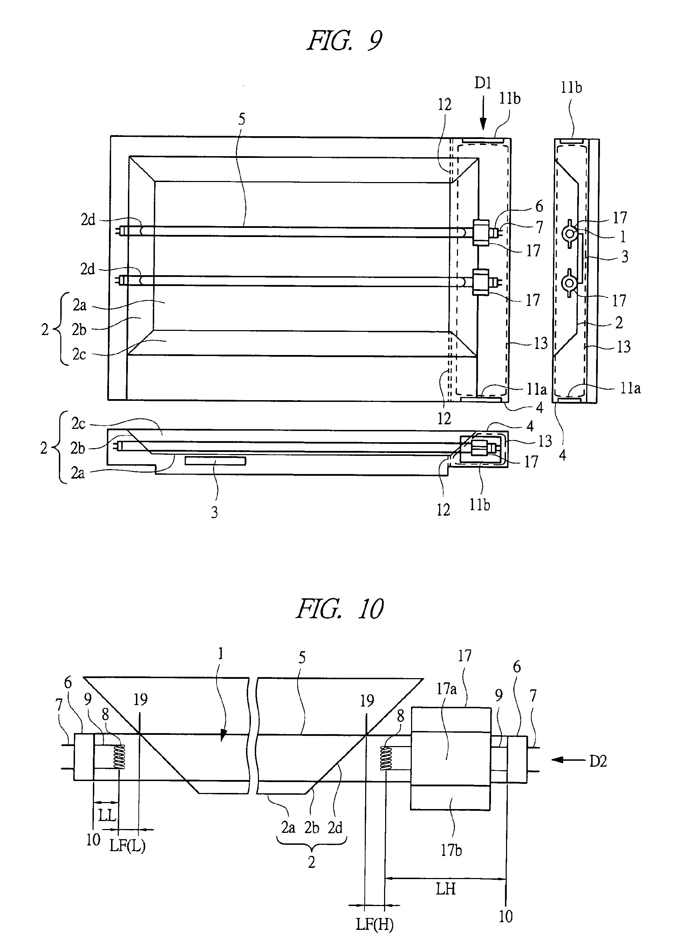

FIG. 9 is a view illustrating a schematic structure of a backlight used for a liquid crystal display device according to a fourth embodiment. In FIG. 9, a different point from the second embodiment is that a radiator 17 is provided in the tube end portion 10 on the longer cathode length side. FIG. 10 is an enlarged view illustrating a position of the radiator 17 in the tube end portion 10 of the hot cathode fluorescent tube 1 according to the fourth embodiment. The radiator 17 is formed of, for example, a cylindrical portion 17a and a fin 17b, and is made of a high conductive material such as aluminum. The radiator 17 is provided between the filament 8 and the base 6 so as not to overlap with both of the filament 8 and the base 6. A reason of arranging the radiator 17 so as not to overlap with the filament 8 is as follows.

For example, the filament 8 is adjusted at a proper temperature for generating thermal electrons. Therefore, the generation of the thermal electrons is suppressed due to cooling the filament 8, and therefore, a desirable driving condition cannot be obtained. In order to avoid this situation, the radiator 17 is not arranged at the position where the filament 8 is covered thereby.

Since the radiator 17 is made of the high conductive material such as aluminum, the radiator absorbs the heat caused from the tube end portion 10 of the hot cathode fluorescent tube 1 well, and transfers the heat to air through the cylindrical portion 17a and the fin 17b. Since the tube end portion 10 exists inside the vent path 13, the heat convection is caused from bottom to top through the vents 11a and 11b. A portion below the vent 11a is almost at the surrounding temperature, and therefore, cooled air cools the radiator 17, and further, cools the tube end portion 10 of the hot cathode fluorescent tube 1. In this manner, the tube end portion 10 being the cold spot of the hot cathode fluorescent tube 1 can be further cooled, and therefore, the cold spot temperature can be optimized. As a result, the brightness efficiency of the hot cathode fluorescent lamp can be improved. Also, compared with the conventional technique, there is no cause of decreasing yield in the technique, and therefore, an effect of suppressing the decrease of the yield can be obtained.

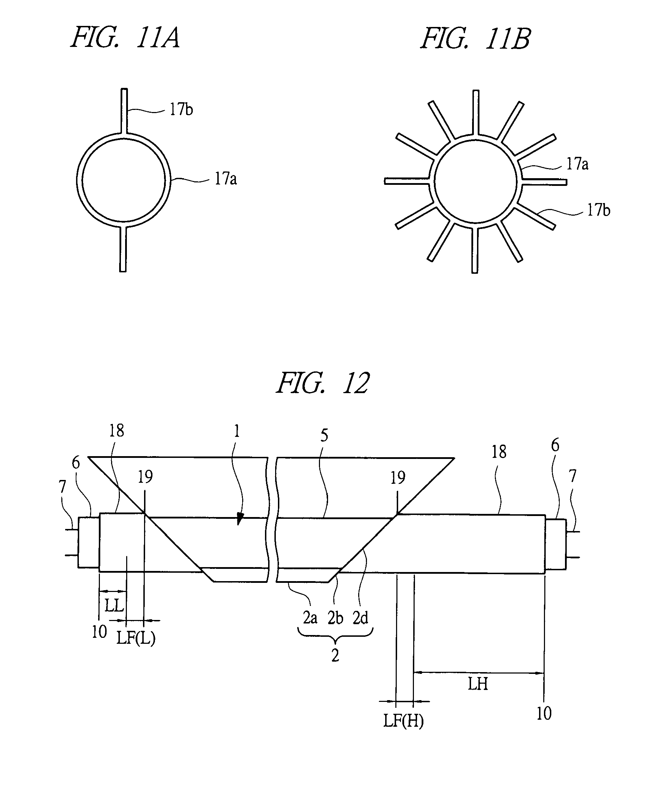

A structure of the radiator 17 according to the fourth embodiment is not limited to the one illustrated in FIG. 11A, and, for example, a lot of fins 17b may be provided as illustrated in FIG. 11b. In this case, it is needles to say that the heat radiation effect is further increased by the radiator 17 illustrated in FIG. 11b. Here, FIGs. 11A and 11B are views from a direction D2 in FIG. 10.

Note that a resin material containing a filler may be filled into the space between the bulb 5 and the radiator 17 in order to improve the heat radiation performance of the hot cathode fluorescent tube 1. A silicon sheet containing the filler can be used as such a resin material, and a thermal conductivity of the resin material is increased depending on a type of the filler, so that the heat radiation performance can be improved. For example, when Al₂O₃, BN, A1N, or SiO₂ is added to the resin (or an elastic body made of the resin) as an inorganic filler, a better thermal conductivity of the resin can be obtained. Also, by selecting a suitable inorganic filler, its thermal expansion coefficient can be also adjusted.

### (Fifth Embodiment)

FIG. 12 is a view illustrating a schematic structure of the hot cathode fluorescent tube 1 configuring a backlight according to a fifth embodiment. In FIG. 12, a different point from the second embodiment is that a reflector 18 is provided in the tube end portion 10 of the hot cathode fluorescent tube 1. The reflector 18 is made of a material having a low conductive property. The reflector 18 is formed so as to cover a portion of the hot cathode fluorescent tube 1 outside the lamp house (outside the reflective plate 2), and so as to fit with a shape of the reflective-plate side surface hole 2d in order to prevent light leakage. Therefore, one end of the reflector 18 is arranged so as to correspond with a boundary between the inside of the lamp house and the outside of the same, or is arranged so as to reach inside the lamp house.

Note that a position of the one end (opposite to the tube end portion 10 side) of the reflector 18 is desirably 5 mm at maximum or shorter from an enter of the lamp house in the reflective-plate side surface hole 2d. This is for preventing unnecessary shade caused by the reflector 18 inside the lamp house as much as possible.

Inside the reflector 18, a high reflective material such as titanium oxide (TiO₂) is formed. Also, inside the tube end portion 10 of the hot cathode fluorescent tube 1, a high reflective material is formed. The high reflective material may be titanium oxide (TiO₂) or phosphor. Since the high reflective material is formed insides the tube end portion 10 of the hot cathode fluorescent tube 1 and the reflector 18 as described above, the light loss due to leaking outside the lamp house and being absorbed by the tube end portion 10 when the high reflective materials are not provided is reflected by the tube end portion 10 and the reflector 18 to be returned inside the lamp house. In this manner, the light loss at the portion (including the tube end portion 10) of the hot cathode fluorescent tube 1 arranged outside the lamp house is returned inside the lamp house, so that the light can be effectively used. Therefore, according to the fifth embodiment, the brightness efficiency of the hot cathode fluorescent lamp can be improved. Also, compared with the conventional technique, there is no cause of decreasing yield in the technique, and therefore, an effect of suppressing the decrease of the yield can be obtained.

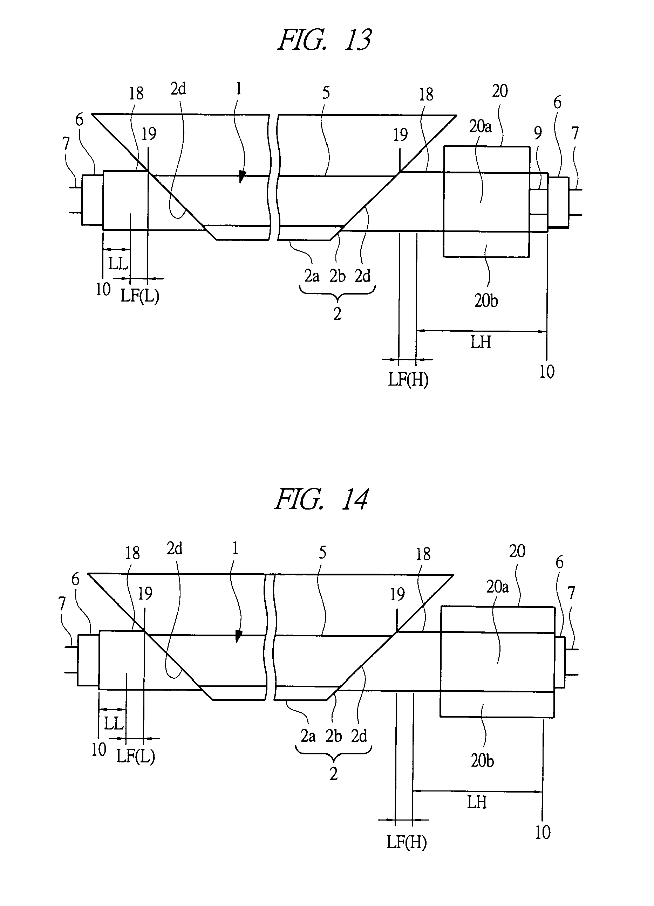

FIG. 13 is a view illustrating another schematic structure of the hot cathode fluorescent tube 1 configuring the backlight according to the fifth embodiment. In FIG. 13, a different point from FIG. 12 is that a heat-radiative reflector 20 having a cylindrical portion 20a and a fin 20b is provided. Although the heat-radiative reflector 20 is made of a high conductive material such as aluminum, a high reflective material such as titanium oxide (TiO₂) is formed inside the cylindrical portion 20a. In this manner, with properly maintaining a temperature of the filament 8, the light loss can be prevented, and the cold spot temperature can be optimized by radiating the heat of the tube end portion 10 and cooling it. As a result, the brightness efficiency of the hot cathode fluorescent lamp can be improved. Also, compared with the conventional technique, there is no cause of decreasing yield in the technique, and therefore, an effect of suppressing the decrease of the yield can be obtained.

Note that the reflector 18 and the heat-radiative reflector 20 may be integrally formed and used as a heat-radiative reflector for simplicity.

### (Sixth Embodiment)

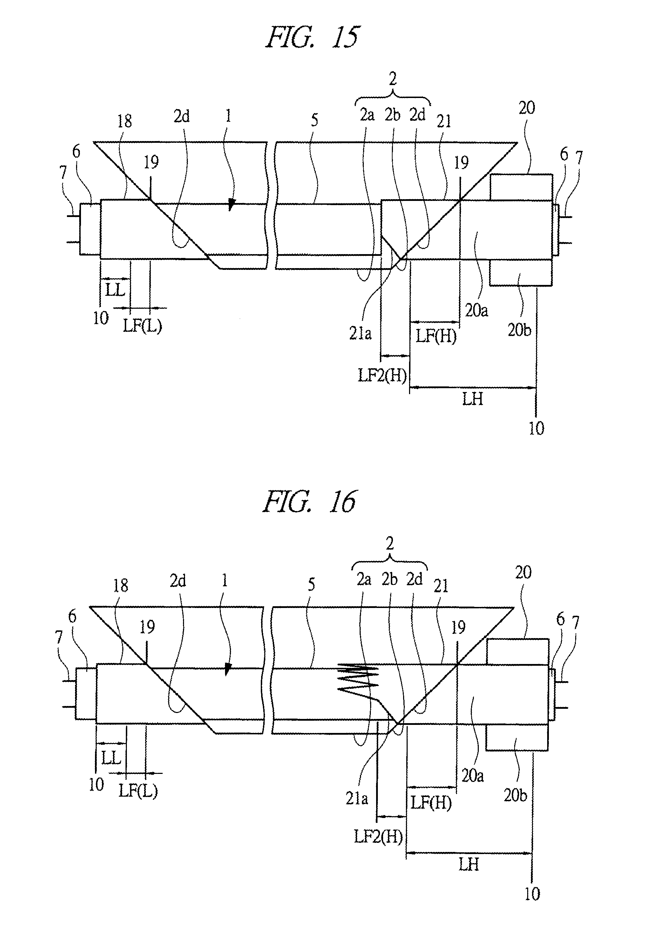

FIG. 15 is a view illustrating a schematic structure of a hot cathode fluorescent tube 1 configuring a backlight according to a sixth embodiment. A different point from FIG. 14 in the fifth embodiment is that, the filament arranged on the longer cathode length side is arranged inside the lamp house, and a double-sided reflector 21 is provided so as to cover the filament.

For example, when the filament is arranged outside the lamp house as illustrated in FIG. 14 in the fifth embodiment, it is required to widely take the frame region. However, in a liquid crystal television or others, it is required to narrowly take the frame region. However, if a length of the hot cathode fluorescent tube protruding outside the lamp house is decreased as less as possible, the filament arranged on the longer cathode length side exists undesirably inside the lamp house. If the filament exists inside the lamp house, the filament exists in the display region, and therefore, the display region is darkened. However, it has been experimentally found out that the darkening becomes allowable by selecting a diffusion plate and an optical sheet because the darkening is not recognized as the brightness nonuniformity by visual contact through the diffusion plate and the optical sheet.

On the other hand, it has been also found out that, when the blackening is severely caused in the regions of about 10 mm backward and forward from the center of the filament in the hot cathode fluorescent tube 1 due to time-dependent change, a vicinity of the filament is darkened and the darkening is recognized as the brightness nonuniformity. That is, it has been found out that, entire change of the brightness is not visually contacted as the brightness nonuniformity, and large local change of the brightness is visually contacted as the brightness nonuniformity. Accordingly, in the sixth embodiment, with a precondition of arranging the filament on the longer cathode length side inside the lamp house, the fluorescent tube region where the blackening is possibly caused is covered by the double-sided reflector 21.

A distance LF2 (H) between a tip of the double-sided reflector 21 and the filament is set longer than or equal to the blackening region. That is, the distance LF2(H) is set to 5 mm or longer by which the blackening is difficult to be highly visible. More desirably, the distance LF2(H) is set to 10 mm or longer by which the blackening is invisible. At this time, in a tip-bottom portion of the double-sided reflector 21, a gradual cut 21a is provided so that the tip-bottom portion is almost fitted with the reflective-plate side surface 2b. On both surfaces of a cylindrical inside of the double-sided reflector 21 and a cylindrical outside of the same, a high reflective material such as titanium oxide (TiO₂) is formed. Further, on a surface of an inside of the cylindrical portion 20a (heat-radiative reflector 20) arranged outside the lamp house, the high reflective material such as titanium oxide (TiO₂) is also formed. Therefore, the light outside the lamp house is reflected into the inside of the lamp house by the heat-radiative reflector 20, and the light inside the lamp house is reflected on the fluorescent tube region covered by the double-sided reflector 21 inside the lamp house, and therefore, the light in this case can be much brighter than the light in the case that the blackening is severely caused. The cut 21a is provided so that the light downwardly emitted from the double-sided reflector 21 is directly irradiated to the reflective plate 2 inside the lamp house.

According to the sixth embodiment, brightness distribution of the light through the diffusion plate and the optical sheet in the vicinity of the double-sided reflector 21 is gradual, and therefore, the light is not recognized as the brightness nonuniformity. And, even when the blackening is caused in the vicinity of the filament of the hot cathode fluorescent tube 1 due to time-dependent change, the blackening region of the hot cathode fluorescent tube 1 is not directly visible because the blackening region is covered by the double-sided reflector 21. Although intensity of the light reflected from the blackening region into the lamp house by the heat-radiative reflector 20 and the double-sided reflector 21 is decreased, a shape of the brightness distribution is not significantly changed compared with that prior to the blackening. Therefore, the light is not recognized as the brightness nonuniformity.

Also, as illustrated in FIG. 16, a tip portion of the double-sided reflector 21 may be formed in, for example, a saw-like shape. In this manner, the brightness distribution on a boundary between the tip portion of the double-sided reflector 21 and the fluorescent tube region adjacent to the tip portion can be gradual, and therefore, the brightness distribution of the light of the fluorescent tube region adjacent to the heat-radiative reflector 21 seen through the diffusion plate and the optical sheet can be further gradual.

As described above, according to the sixth embodiment, even when the blackening is severely caused due to time-dependent change, the significant effect of not causing the brightness nonuniformity can be obtained with shortening the frame region. Also, with properly maintaining the temperature of the filament, the light loss can be prevented and the cold spot temperature can be optimized by radiating the heat of the tube end portion 10 and cooling it, and therefore, the effect of improving the brightness efficiency of the hot cathode fluorescent lamp can be also obtained. Further, compared with the conventional technique, there is no cause of decreasing yield in the technique, and therefore, the effect of suppressing the decrease of the yield can be also obtained.

### (Seventh Embodiment)

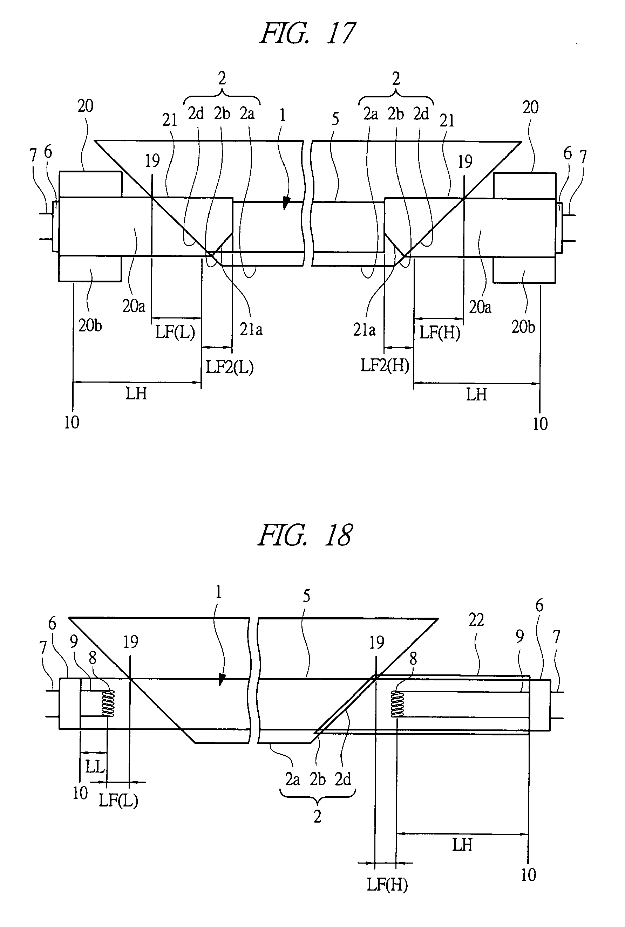

FIG. 17 is a view illustrating a schematic structure of a hot cathode fluorescent tube 1 configuring a backlight according to a seventh embodiment. A different point from FIG. 15 of the sixth embodiment is that a long cathode length is provided on both ends of the hot cathode fluorescent tube 1. More specifically, each cathode length on both ends of the hot cathode fluorescent tube 1 is 30 mm or longer. In this manner, their brightness distributions can be symmetric. Further, since filaments on both ends are positioned inside the lamp house, a distance between the pair of filaments can be shorter, and therefore, a length of the hot cathode fluorescent tube 1 can be smaller. Therefore, low power consumption of the backlight can be also achieved. At this time, brightness on a display center portion is hardly changed even with the low power consumption, and therefore, an effect of substantially improving the brightness efficiency can be also obtained.

Further, for simplicity, the fin 20b of the left heat-radiative reflector 20 formed outside the lamp house may be removed. This is because, the cold spot exists in the right tube end portion 10, and therefore, even when the temperature of the left tube end portion 10 is high in some degree, the luminance efficiency (brightness efficiency) is hardly influenced by the high temperature.

As described above, according to the seventh embodiment, even when the blackening is severely caused, the effects of not causing the brightness nonuniformity and of providing the symmetric brightness distribution can be obtained with shortening the frame region. Further, with properly maintaining the temperature of the filament, the light loss can be prevented, and the cold spot temperature can be optimized by radiating the heat of the tube end portion 10 and cooling it, and therefore, the effect of improving the brightness efficiency of the hot cathode fluorescent tube 1 can be also obtained. Still further, by providing the hot cathode fluorescent tube 1 in which the filament is arranged inside the lamp house, the hot cathode fluorescent tube 1 can be shortened, and therefore, the effect of substantially improving the brightness efficiency can be also obtained. Still further, compared with the conventional technique, there is no cause of decreasing yield in the technique, and therefore, the effect of suppressing the decrease of the yield can be also obtained.

Still further, in the seventh embodiment, both of the heat-radiative reflector 20 and the double-sided reflector 21 are used. However, without using both, the filament can be arranged inside the lamp house. In this case, with hardly changing the brightness of the display center portion, the high efficiency caused by shortening the hot cathode fluorescent tube 1 can be achieved. Further, the waste light can be reduced by shortening the length of the tube end portion of the hot cathode fluorescent tube 1 arranged outside the lamp house, so that the high efficiency can be further achieved.

### (Eighth Embodiment)

In an eighth embodiment, an action against a case that the cold spot temperature is lower than the optimum temperature for the luminance efficiency (brightness efficiency) is described. FIG. 18 is a view illustrating a schematic structure of a hot cathode fluorescent tube 1 configuring a backlight according to the eighth embodiment. A different point from FIG. 12 of the fifth embodiment is that the reflector 18 is replaced to a heat-resistant thermal isolator 22. The fifth embodiment has described the case that the cold spot temperature is higher than the optimum temperature for the luminance efficiency (brightness efficiency) prior to providing the reflector 18 or the heat-radiating reflector 20 (in the case of not taking any action). Contrarily, when input power is decreased or others, the cold spot temperature may be lower than the optimum temperature for the luminance efficiency (brightness efficiency) in the case of not taking any action. In such a case, the heat-resistant thermal isolator 22 having heat resistance and thermal insulating properties is used in the place of the reflector 18. That is, the heat-resistant thermal isolator 22 is provided so as to cover the surface of the bulb outside the lamp house. As a material of the heat-resistant thermal isolator 22, there is a glass wool or a cellulose fiber. Also, even the reflector 18 according to the fifth embodiment can be used as the thermal isolator as long as low thermal conductivity.

As described above, according to the eighth embodiment, the cold spot temperature can be optimized by adiabatically heating the tube end portion 10, and therefore, the brightness efficiency of the hot cathode fluorescent tube 1 can be improved. Further, compared with the conventional technique, there is no cause of decreasing yield in the technique, and therefore, an effect of suppressing the decrease of the yield can be also obtained.

In the foregoing, the invention made by the inventors has been concretely described based on the embodiments. However, it is needless to say that the present invention is not limited to the foregoing embodiments and various modifications and alterations can be made within the scope of the present invention.

While the backlight according to each embodiment can be used for, for example, a 32-inch large-scaled liquid crystal television as described above, the usage is not limited to this. Further, it can be also used for a large-scaled (for example, 37, 42, 50, 60, 70, 100 inch, or others) liquid crystal television or amiddle-scaled (for example, 14 to 26 inch) liquid crystal television. Still further, the usage is not limited to the liquid crystal televisions but also to a backlight of an other image display device (more particularly, for a large display) or a backlight for a billboard.

For example, the backlight according to each embodiment described above is used as a light source for a liquid crystal display whose display size is 10 to 60 inch, and one or two hot cathode fluorescent tube (hot cathode fluorescent lamp) described in each embodiment above is arranged in a package of the backlight.

Also, the backlight according to each embodiment described above is used as a light source for a liquid crystal display whose display size is 10 to 35 inch, and one hot cathode fluorescent tube (hot cathode fluorescent lamp) described in each embodiment above is arranged in a package of the backlight.

Further, the backlight according to each embodiment described above is used as a light source for a liquid crystal display whose display size is 25 to 45 inch, and two hot cathode fluorescent tubes (hot cathode fluorescent lamps) described in each embodiment above are arranged in a package of the backlight.

Still further, the backlight according to each embodiment described above is used as a light source for a liquid crystal display whose display size is 40 to 80 inch, and three or four hot cathode fluorescent tubes (hot cathode fluorescent lamps) described in each embodiment above are arranged in a package of the backlight.

The present invention is not limited to the embodiments described above, and it also includes various combinations of the embodiments described above. As described above, by the backlight according to the present invention, the significant effect of improving the brightness efficiency of the backlight and the liquid crystal display device using the backlight can be obtained without decreasing yield. Note that it is needless to say that all of possible combinations of the embodiments described above can be used as the present invention.

The present invention can be widely used in manufacture industry of manufacturing the backlight and the liquid crystal display device using the backlight.

## Claims

1. A backlight comprising:
a hot cathode fluorescent lamp; and
a lamp house in which the hot cathode fluorescent lamp is arranged,
wherein the hot cathode fluorescent lamp includes:
a bulb on whose inside surface phosphor is formed; and
a pair of filaments provided inside the bulb and emitting thermal electrons, and
wherein at least one tube end portion of the bulb is a cold spot of the hot cathode fluorescent lamp.

2. The backlight according to claim 1, wherein
a first cathode length being a distance between at least one tube end portion of the bulb and a first filament of the pair of filaments arranged close to the one tube end portion is 30 mm or longer,
a second cathode length being a distance between the other tube end portion of the bulb and a second filament of the pair of filaments arranged close to the other tube end portion is preferably also 30 mm or longer, and
the first cathode length is preferably 30 to 70 mm.

3. The backlight according to claim 1 or 2, wherein
a first cathode length being a distance between one tube end portion of the bulb and a first filament of the pair of filaments arranged close to the one tube end portion is different from a second cathode length being a distance between the other tube end portion of the bulb and a second filament of the pair of filaments arranged close to the other tube end portion, and
a temperature of the one tube end portion is lower than that of a center portion of the bulb.

4. The backlight according to any preceding claim, wherein
the tube end portion of the bulb is arranged outside the lamp house, and/or
a tube diameter of the bulb is 10 to 35 mm.

5. The backlight according to claim 4, wherein a length of a portion arranged outside the lamp house on the one tube end portion side of the bulb is different from that arranged outside the lamp house on the other tube end portion side of the bulb.

6. The backlight according to claim 4, wherein
a heat-radiative vent path having at least two vents outside the lamp house is provided, and
the one tube end portion of the bulb is arranged in the heat-radiative vent path.

7. The backlight according to claim 6, wherein
an area of an opening portion of at least one vent of the two vents is variable, and/or
a fan is provided in the heat-radiative vent path.

8. The backlight according to any preceding claim, wherein
a base is provided in the tube end portion of the bulb, and
a radiator is provided so as to cover a surface of the bulb between the base and the filament.

9. The backlight according to claim 4, wherein
a reflector of reflecting light is provided so as to cover a surface of the bulb arranged outside the lamp house, and
a reflective material is formed on an inside surface of the reflector contacted with the surface of the bulb.

10. The backlight according to claim 9, wherein
a first filament of the pair of filaments arranged close to the one tube end portion is arranged outside the lamp house, and
one end of the reflector is arranged so as to correspond with a boundary between an inside of the lamp house and an outside of the same, or is arranged so as to reach the inside of the lamp house.

11. The backlight according to claim 4, wherein
a heat-radiative reflector having functions of reflecting light and radiating heat is provided so as to cover a surface of the bulb arranged outside the lamp house, and a reflective material is formed on an inside surface of the heat-radiative reflector contacted with the surface of the bulb, and/or
a heat-resistant thermal isolator is provided so as to cover a surface of the bulb arranged outside the lamp house.

12. A backlight comprising:
a hot cathode fluorescent lamp; and
a lamp house in which the hot cathode fluorescent lamp is arranged,
wherein the hot cathode fluorescent lamp includes:
a bulb on whose inside surface phosphor is formed; and
a pair of filaments provided inside the bulb and emitting thermal electrons, and
wherein a first filament of the pair of filaments arranged close to at least one tube end portion of the bulb is arranged inside the lamp house.

13. The backlight according to claim 12, wherein
a reflector of reflecting light is provided so as to cover a surface of the bulb arranged outside the lamp house,
a double-sided reflector of reflecting light is provided so as to partially cover a surface of the bulb arranged inside the lamp house,
a reflective material is formed on an inside surface of the reflector contacted with the surface of the bulb, and
a reflective material is formed on both of an inside surface of the double-sided reflector contacted with the surface of the bulb and an outside surface opposite to the inside surface.

14. The backlight according to claim 13, wherein the double-sided reflector is formed so as to cover a blackening region formed at a position away by a predetermined distance from the first filament of the pair of filaments arranged close to the one tube end portion.

15. A liquid crystal display device comprising the backlight according to any preceding claim, wherein a cold spot temperature of the hot cathode fluorescent lamp is in a range of 40 to 60°C when a surrounding temperature of the liquid crystal display device is 25°C.
